# EUROPEAN PATENT APPLICATION

(11) **EP 4 518 408 A1**
(43) Date of publication of application: **05.03.2025**
(21) Application number: 23794859.1
(22) Date of filing: 20.03.2023
(51) Int. Cl.: H04W 24/08, H04W 24/00

(54) **SERVICE CAPACITY LOAD PARAMETER REPORTING METHOD, AND APPARATUS**

(30) Priority: 28.04.2022 CN 202210462553
(71) Applicant: ZTE Corporation, Shenzhen, Guangdong 518057 (CN)
(72) Inventor: ZHU, Yibin, Shenzhen, Guangdong 518057 (CN); HU, Min, Shenzhen, Guangdong 518057 (CN); MA, Xin, Shenzhen, Guangdong 518057 (CN)
(74) Representative: Chimini, Francesco
(86) International application number: PCT/CN2023/082589
(87) International publication number: WO 2023/207424

(57) **Abstract**

Provided are a service capacity load parameter reporting method and apparatus, the method comprising: a statistical capability and a reporting capability corresponding to a service capacity load parameter are issued to a network data analytics function (NWDAF); a subscription message sent by the NWDAF and used for acquiring the service capacity load parameter is received; the service capacity load parameter is determined according to the subscription message; and the service capacity load parameter is reported to the NWDAF. By means of the present invention, the problem in the related art that measuring a **NF** load according to a general load measurement parameter cannot accurately and real-timely reflect an **NF** service load change. By reporting the service capacity load parameter to an NWDAF, the **NF** service load change can be accurately and real-timely reflected.

## Description

### Cross-Reference to Related Application

The present invention claims the priority of Chinese Patent Application CN202210462553.3, filed on 28 April 2022 and entitled "Service Capacity Load Parameter Reporting Method and Apparatus ", the invention of which is incorporated herein by reference in its entirety.

### Technical Field

The present invention relates to the field of communications, and in particular, to a service capacity load parameter reporting method and apparatus.

### Background

3GPP TS 28.552 specifies that when collecting load data from a network function (NF), a network data analytics function (NWDAF) collects generic load measurement parameters such as the virtual CPU, memory, and disk of virtual network function (VNF) components; however, these parameters reflect the lower-level common load, and cannot accurately and real-timely reflect the change of the NF service load (subscriber capacity load and/or traffic load).

In practical commercial applications, resources related to the capacity and/or traffic of the 5G users and provided by the VNFC, such as a UE Context, a PDU Session, a QoS Flow, and a Traffic Bandwidth, are limited. When the load of the NF is measured, these resources need to be included to completely reflect the load of the NF.

Furthermore, due to the soft hardware decoupling of the virtual architecture, one NF may be deployed in different hardware, so that the relationship between the load levels of the subscriber resources of different VNFCs and the load levels of common parameters such as CPU, memory and disk is also not constant.

Therefore, in 3GPP TS28.552, the load of the NF or the VNFC is only measured according to the general load measurement parameters at present, and it cannot reflect the load of service-related resources in real time, thus resulting in incompleteness to some extent.

### Summary

The embodiments of the present invention provide a service capacity load parameter reporting method and apparatus, so as to at least solve the problem in the related art that measuring a NF load according to a general load measurement parameter cannot accurately and real-timely reflect an NF service load change.

According to an embodiment of the present invention, provided is a service capacity load parameter reporting method, comprising: a statistical capability and a reporting capability corresponding to a service capacity load parameter is issued to a network data analytics function (NWDAF); a subscription message sent by the NWDAF and used for acquiring the service capacity load parameter is received; the service capacity load parameter is determined according to the subscription message; and the service capacity load parameter is reported to the NWDAF.

According to another embodiment of the present invention, provided is a service capacity load parameter reporting apparatus, comprising:
an issuing module, configured to issue, to a network data analysis function (NWDAF), a statistical capability and a reporting capability corresponding to a service capacity load parameter;
a receiving module, configured to receive a subscription message sent by the NWDAF and used for acquiring the service capacity load parameter;
a determination module, configured to determine the service capacity load parameter according to the subscription message; and
a sending module, configured to report the service capacity load parameter to the NWDAF.

According to another embodiment of the present invention, a computer readable storage medium is further provided, wherein the storage medium stores a computer program, and the computer program is configured to cause, when executed by a processor, the processor to perform the steps in any one of the described method embodiments.

According to another embodiment of the present invention, further provided is an electronic device, comprising a memory and a processor, wherein the memory stores a computer program, and the processor is configured to execute the computer program to perform the steps in any one of the method embodiments.

### Brief Description of the Drawings

The drawings illustrated herein are used for providing further understanding of the present invention and constitute a part of the present invention, and the exemplary embodiments of the present invention and illustrations thereof are used for explaining the present invention, rather than constitute inappropriate limitation on the present invention. In the drawings:
Fig. 1 is a hardware structure block diagram of a service capacity load parameter reporting method according to an embodiment of the present invention;
Fig. 2 is a flowchart of a service capacity load parameter reporting method according to an embodiment of the present invention;
Fig. 3 is a schematic diagram of an NF reporting a service capacity load parameter to an NWDAF according to an embodiment of the present invention;
Fig. 4 is a flowchart of a service capacity load parameter reporting method according to a preferred embodiment of the present invention;
Fig. 5 is a structural block diagram of a device for reporting a service capacity load parameter according to an embodiment of the present invention.

### Detailed Description of the Embodiments

The present invention will be described below in detail with reference to the accompanying drawings and in conjunction with the embodiments. It should be noted that the embodiments in the present invention and features in the embodiments can be combined without conflicts.

It is to be noted that the terms "first", "second", etc. in the description, claims and drawings of the present invention are used to distinguish similar objects, and are not necessarily used to describe a specific sequence or a precedence order.

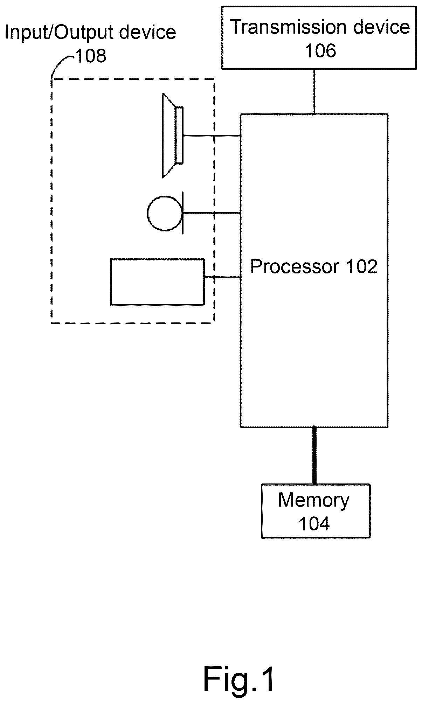

The method embodiment provided according to the first embodiment of the present invention may be implemented in a network element device, a computer terminal, or a similar computing device. Taking running on the network element device as an example, Fig. 1 is a hardware structure block diagram of a service capacity load parameter reporting method according to an embodiment of the present invention. As shown in Fig. 1, a network element device 10 may include one or more processors 102 (only one is shown in Fig. 1) (the processor 102 may include, but is not limited to, a processing device such as a microprocessor (MCU) or a programmable logic device (FPGA)) and a memory 104 for storing data. Optionally, the network element device above can further include a transmission device 106 for a communication function and an input/output device 108. A person of ordinary skill in the art would understand that the structure shown in Fig. 1 is merely exemplary, and does not limit the structure of the described network element device. For example, the network element device 10 may also include more or fewer components than those shown in Fig. 1, or have different configurations from that shown in Fig. 1.

The memory 104 may be configured to store a computer program, for example, a software program and a module of application software, such as a computer program corresponding to the data transmitting and receiving method in the embodiment of the present invention. The processor 102 runs the computer program stored in the memory 104, so as to execute various function applications and data processing, that is, to implement the foregoing method. The memory 104 may include a high-speed random access memory, and may also include a non-transitory memory, such as magnetic storage devices, flash memories, or other non-transitory solid-state memories. In some instances, the memory 104 may further include memories remotely arranged with respect to the processor 102, and these remote memories may be connected to the network element 10 over a network. Examples of the described network include, but are not limited to the Internet, an intranet, a local area network, a mobile communication network, and a combination thereof.

The transmission device 106 is configured to receive or transmit data over a network. Examples of the described network include, but are not limited to the Internet, an intranet, a local area network, a mobile communication network, and a combination thereof.

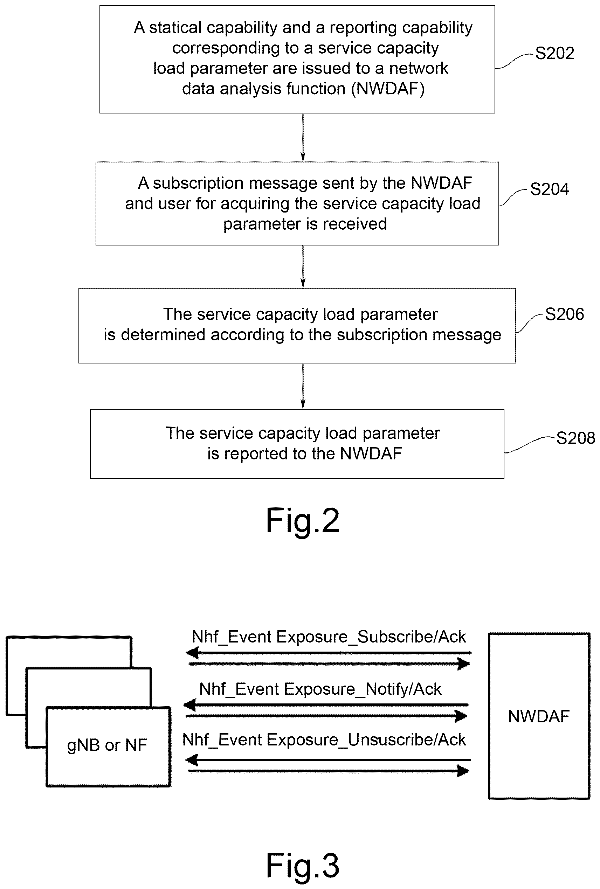

A service capacity load parameter reporting method running on the described mobile terminal or network architecture is provided in the present embodiment. Fig. 2 is a flowchart of a service capacity load parameter reporting method according to an embodiment of the present invention. As shown in Fig. 2, the flow comprises the following steps:
step S202: a statistical capability and a reporting capability corresponding to a service capacity load parameter are issued to a network data analysis function (NWDAF),
the statistical capability referring to the statistical type of the service capacity load parameter, and the reporting capability referring to the reporting time interval of the service capacity load parameter,
wherein in the present embodiment, step S202 may specifically comprise: the statistical capability and reporting capability corresponding to the service capacity load parameter are directly issued to the NWDAF; or by means of a network exposure function (NEF) or a network repository function (NRF), the statistical capability and the reported capability corresponding to the service capacity load parameter are issued to the NWDAF, specifically, firstly the statistical capability and report capability corresponding to the service capacity load parameter are issued to the NEF or NRF, and then forwarded same to the NWDAF by the NEF or NRF;
step S204: a subscription message sent by the NWDAF and used for acquiring the service capacity load parameter is received;
step S206: the service capacity load parameter is determined according to the subscription message; and
step S208: the service capacity load parameter is reported to the NWDAF.

By means of the steps, the problem in the related art that measuring a **NF** load according to a general load measurement parameter cannot accurately and real-timely reflect an **NF** service load change. By reporting the service capacity load parameter to an NWDAF, the **NF** service load change can be accurately and real-timely reflected.

In an embodiment, in step S206, the service capacity load parameter can be specifically determined in the following way: first the type of the service capacity load parameter to be counted is determined according to the subscription message; at every preset first time interval, the number of service resources being currently used by each virtual network function component (VNFC) corresponding to the type are counted; and the service capacity load parameter is determined according to the number of the service resources; for the determination of the service capacity load parameter, first whether there is a license is determined; if there is a license and the software licensing capability of the license is less than the actual hardware capability of the NF, a ratio of the number of service resources to the software licensing capability is determined as the service capacity load parameter; if there is no license or the software licensing capability is greater than the actual hardware capability, the ratio of the number of service resources to the actual hardware capability is determined as the service capacity load parameter.

Specifically, assuming that in the **NF** network element, the software license of each service capacity load is L, the actual hardware capability is C, and the smaller of the two is taken, for example, when the service capacity load parameter to be reported is the subscriber usage, the subscriber usage = the number of currently used subscriber resources/min (L, C).

In the present embodiment, step S208 may specifically comprise: firstly a time interval (i. e. the second time interval) for reporting a service capacity load parameter is determined according to a subscription message; the service capacity load parameter is reported to the NWDAF every second time interval; and further, if there is a service capacity load parameter, the service capacity load parameter is reported to the NWDAF; if there are a plurality of service capacity load parameters, the plurality of service capacity load parameter are reported to the NWDAF according to a preset reporting policy.

For a scenario in which there are a plurality of service capacity load parameters, some or all of the service capacity load parameters may be reported, and specifically, the plurality of service capacity load parameter are reported to the NWDAF, that is, all of the service capacity load parameters are reported to the NWDAF; a service capacity load parameter with the highest load can be determined first from the plurality of service capacity load parameters, and the service capacity load parameter with the highest load is reported to the NWDAF; alternatively, a service capacity load parameter may be specified on the basis of a preset parameter name, and the pre-specified service capacity load parameter is reported to the NWDAF.

In an embodiment, after step S204, the NWDAF may also stop subscription, that is, the NF is notified that the SCF does not need to report the service capacity load parameter any more. Specifically, the NWDAF receives an unsubscription message sent by the NWDAF, and according to the unsubscription message, stops determining and reporting the service capacity load parameter.

The present embodiment improves the TS28.552, adds load, at the NF side, measurement data of resources related to the 5G service (subscriber and/or traffic) which are not in the TS28.552, and provides same to the NWDAF, so that the NWDAF can perform network intelligent optimization such as load balancing and traffic routing more safely. The service (subscriber and/or traffic) load measurement data can assist the NWDAF in considering the 5G service resources of the VNFC when performing optimization such as load balancing and traffic routing, and can effectively ensure that the NF is not deteriorated continuously in the case of resource shortage, thereby ensuring that the user experience of the 5G service is more optimized. The NWDAF may not only use parameters such as CPU, memory and disk of the NF to determine the current load condition of the NF, but can also use a real-time service (subscriber and/or traffic) load to determine the current load of the NF.

The service capacity load parameter provided by various types of NF network elements in the embodiments of the present invention are load data related to subscriber and/or traffic, and different types of network element devices correspond to different types of service capacity load parameters. The service capacity load parameters provided by various type of NF network elements are as shown in Table 1.

**Table 1**

| NF name | Provided service capacity load parameter | The Chinese meaning of the parameter |
|---|---|---|
| gNB | PDU Session Usage | PDU 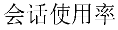 |
| | QoS Flow Usage | QoS 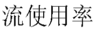 |
| | Traffic Bandwidth Usage | 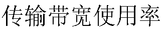 |
| AMF | UE Context Usage | UE 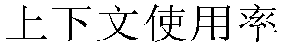 |
| SMF | UE Context Usage | UE 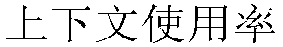 |
| UPF | PDU Session Usage | PDU 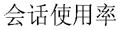 |
| | QoS Flow Usage | QoS 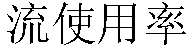 |
| | Traffic Bandwidth Usage | 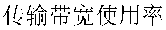 |
| PCF | Subscriber Usage | 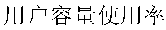 |
| UDM | Subscriber Usage | 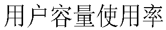 |
| N3IWF | PDU Session Usage | PDU 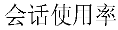 |
| | QoS Flow Usage | QoS 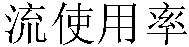 |
| | Traffic Bandwidth Usage | 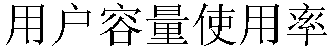 |

The present embodiment may be implemented not only on the network elements listed in Table 1, but also on the subscriber load parameters provided by the various network elements in Table 1. If the NF and the gNB also have other global resource constraints besides subscriber, they can also be reported by the method provided by the present invention.

The execution subject of the foregoing technical solution in the present embodiment may be, but is not limited to, different types of NF NE devices, terminals, etc.

Specifically, the network element device includes but is not limited to a next generation node B (gNB), an access and mobility management function (AMF), a session management function (SMF), a user plane function (UPF), a policy control function (PCF), a unified data management (UDM), and a non-3GPP interworking function (N3IWF).

By means of the described steps, the NWDAF not only can use general parameters, such as CPU, memory and disk, of the NF to determine the current load condition of the NF, but also can use a real-time service (subscriber and/or traffic) load to determine the current load of the NF, so as to better optimize load balancing, traffic routing, etc.

The network element device involved in the present embodiment comprises a 5G gNB, an NF and an NWDAF. Fig. 3 is a schematic diagram of an NF reporting a service capacity load parameter to an NWDAF according to an embodiment of the present invention. As shown in Fig. 3, the NWDAF sends a subscription message to the NF or gNB by means of a Nnf_EventExposure_Subscribe service, after determining the load data related to 5G service resources, the NF or gNB reports the service capacity load parameter to the NWDAF by means of the Nnf_EventExposure_Notify service; and the NWDAF may also send an unsubscription message to the NF or NNB by means of a Nnf_EventExposure_Unsubscribe service to stop counting, determining and reporting the service capacity load parameter.

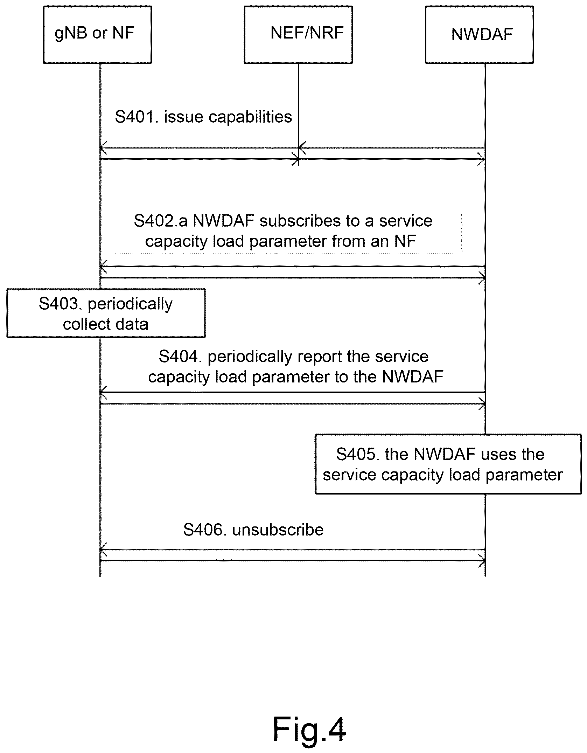

Fig. 4 is a flowchart of a service capacity load parameter reporting method according to a preferred embodiment of the present invention. As shown in Fig. 4, the method comprises: S401, an NF issue a statistical capability and a reporting capability corresponding to the service capacity load parameter, specifically issue a type of a service capacity load that can be reported and/or a reporting time interval capability, which can be issued directly to an NWDAF, and also can be issued to the NWDAF by means of an NEF/NRF; it differs from the existing standard in that the issuing includes a statistical type capability (i.e. the statistical capability) of a service (subscriber and/or traffic) capacity load parameters and/or a reporting time interval capability (i.e. the reporting capability) of the service capacity load parameter that can be provided. In step 401, besides issuing the subscriber load measuring capability to the NEF/NRF, the NWDAF may also directly negotiate with the NBF or the NF to obtain the capability.

S402: an NF receives a subscription message sent by an NWDAF and used for acquiring a service capacity load parameter, and a service capacity load type and/or a reporting interval which need to be reported can be subscribed to by means of the subscription message; the NWDAF subscribes to service (subscriber and/or traffic) capacity load measurement data from an NF or an NB by using an Nnf_EventExposure_Subscribe message, and it differs from the existing standard in that the message includes a requirement for the service capacity load measurement type and/or the reporting interval. The NF or the gNB makes a response.

S403: the NF periodically collects the service capacity load parameter (corresponding to periodically collecting at a first time interval), and the NF or the gNB counts the number of resources related to a service (subscriber and/or traffic) on each VNFC of the present device at a pre-defined time interval, and then divides same by the number of license of the present service resources of the present device, so as to obtain a load value of the present resource.

When calculating the service capacity load in Table 1, when there is a license, the license (which is assumed to be L) can be used, and the actual capability (which is assumed to be C) of the present VNFC can also be used, and the smaller of the two is taken, for example, the subscriber usage = the number of currently used user context resources/min (L, C). When there is no license, the actual capability of the present VNFC is used, for example, subscriber usage =the number of currently used user context resources /C.

S404: the NF reports the service capacity load parameter to the NWDAF, and reports load measurement data to the NWDAF by using a Nnf_EventExposure_Notify service according to a time interval appointed by the NWDAF;
when there are a plurality of subscriber load parameters in the NF and the gNB, the following reporting policies can be used: selecting a parameter with the highest load to report; reporting all the parameters; and other policies complying with the characteristics of the present device.

S405: the NWDAF uses the service capacity load parameter, which can be specifically used for determining the current load condition of the NF, and can also use a real-time service (subscriber and/or traffic) load to determine the current load of the NF. Specifically, after the NF or the NB reports the service capacity load parameter to the NWDAF, the NWDAF applies the received service capacity load parameter to adjust a network load. After acquiring the measurement data of service (subscriber and/or traffic) load provided by the NF, the NWDAF can be applied to scenarios such intelligent network optimization, but is not limited to only an intelligent network optimization scenario.

S406: the NWDAF unsubscribes, and during the service process after step S402, the NWDAF can stop acquiring the load measurement data related to the service (subscriber and/or traffic) by means of a Nnf_EventExposure_Unsubscribe service of the NF or the gNB at any time.

By means of the embodiments of the present invention, during load balancing, the NWDAF can ensure that a service capacity load of an NF does not break through a load upper limit while satisfying a predetermined policy, thereby guaranteeing the user service experience and a network KPI. For example, during NWDAF load balancing or traffic routing, it can be ensured that the throughput of the UPF does not break through the upper limit of the UPF while satisfying a predetermined policy, thereby fully guaranteeing the service experience of the user. This effect is that the UPF provides subscriber load measurement data for the device, and the NWDAF is implemented after data analysis.

The method in the present embodiment can be applied to a scenario of an autonomous network/NWDAF adjusting a network load, a mobility optimization scenario, a traffic optimization scenario, a vehicle-to-everything network performance prediction scenario, a network slice selection scenario, etc., and includes, but is not limited to, subsequent more application scenarios of determining loads of an NF and a gNB involved in autonomous networks.

An service capacity load parameter reporting apparatus is also provided in the present embodiment. The apparatus is used for implementing the described embodiments and preferred implementations, and what has been described will not be elaborated. As used below, the term "module" may implement a combination of software and/or hardware of predetermined functions. Although the apparatus described in the following embodiments is preferably implemented in software, implementation in hardware or a combination of software and hardware is also possible and conceived.

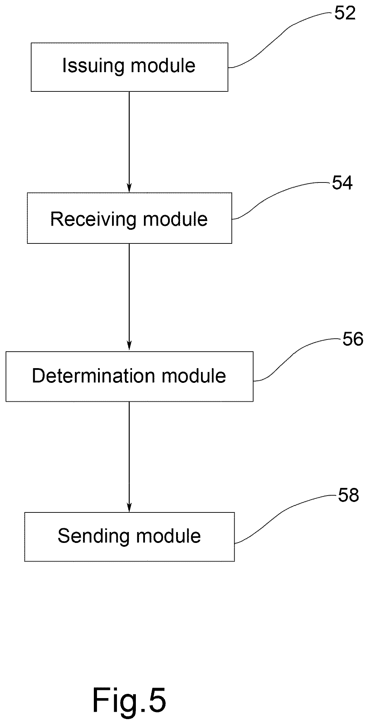

Fig. 5 is a structural block diagram of a service capacity load parameter reporting apparatus according to an embodiment of the present invention. As shown in Fig. 5, the apparatus includes: an issuing module 52, a receiving module 54, a determination module 56 and a sending module 58.
the issuing module 52, configured to issue, to a network data analysis function (NWDAF), a statistical capability and a reporting capability corresponding to a service capacity load parameter;
the receiving module 54, configured to receive a subscription message sent by the NWDAF and used for acquiring the service capacity load parameter;
the determination module 56, configured to determine the service capacity load parameter according to the subscription message; and
the sending module 58, configured to report the service capacity load parameter to the NWDAF.

In one embodiment, the determination module 56 comprises: a first determination sub-module, configured to determine, according to the subscription message, the type of the service capacity load parameter to be counted; a counting sub-module, configured to count, at every preset first time interval, the number of service resources being currently used by each virtual network function component (VNFC) corresponding to the type; and a second determination sub-module, configured to determine the service capacity load parameter according to the number of the service resources.

In one embodiment, the second determination sub-module is further configured to determine, when there is a software license and a software licensing capability of the license is less than an actual hardware capability, a ratio of the number of service resources to the software licensing capability as the service capacity load parameter; and determine, when there is no license or the software licensing capability is greater than the actual hardware capability, the ratio of the number of service resources to the actual hardware capability as the service capacity load parameter.

In one embodiment, the sending module 58 is further configured to report the service capacity load parameter to the NWDAF every second time interval, the second time interval being determined according to the subscription message.

In one embodiment, the sending module 58 is further configured to report, when there is the service capacity load parameter, the service capacity load parameter to the NWDAF; and report, when there are a plurality of service capacity load parameters, the plurality of service capacity load parameters to the NWDAF according to a preset reporting policy.

In one embodiment, the issuing module 52 is further configured to issue the statistical capability and the reporting capability directly to the NWDAF, or issue the statistical capability and the reported capability to the NWDAF by means of a network exposure function (NEF) or a network repository function (NRF).

In one embodiment, the device further comprises: a second receiving module, configured to receive an unsubscription message sent by the NWDAF after having received a subscription message sent by the NWDAF and used for acquiring service capacity load parameter; and a stopping module, configured to stop determining and reporting the service capacity load parameter according to the unsubscription message.

It should be noted that the modules above may be implemented by software or hardware, and the latter may be implemented in the following manner, but is not limited thereto: the modules are located in the same processor; or the modules are located in different processors in an arbitrary combination.

The embodiments of the present invention further provide a computer readable storage medium, wherein the storage medium stores a computer program, and the computer program is configured to cause, when executed by a processor, the processor to perform the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present invention further provide an electronic apparatus, including a memory and a processor; the memory stores a computer program, and the processor is configured to execute the computer program to perform the steps in any one of the method embodiments.

It is apparent that a person skilled in the art shall understand that all of the above-mentioned modules or operations in the present invention may be implemented by using a general computation apparatus, may be centralized on a single computation apparatus or may be distributed on a network composed of multiple computation apparatuses. Optionally, they may be implemented by using executable program codes of the computation apparatuses. Thus, they may be stored in a storage apparatus and executed by the computation apparatuses, the shown or described operations may be executed in a sequence different from this sequence under certain conditions, or they are manufactured into each integrated circuit module respectively, or multiple modules or operations therein are manufactured into a single integrated circuit module. Thus, the present invention is not limited to any specific hardware and software combinations.

The content above only relates to preferred embodiments of the present invention, and is not intended to limit the present invention. For a person skilled in the art, the present invention may have various modifications and changes. Any modifications, equivalent replacements, improvements and the like made within the principle of the present invention shall fall within the scope of protection of the present invention.

## Claims

1. A method for reporting a service capacity load parameter, comprising:
issuing, to a network data analysis function NWDAF, a statistical capability and a reporting capability corresponding to a service capacity load parameter;
receiving a subscription message sent by the NWDAF and used for acquiring the service capacity load parameter;
determining the service capacity load parameter according to the subscription message; and
reporting the service capacity load parameter to the NWDAF.

2. The method according to claim 1, wherein determining the service capacity load parameter according to the subscription message comprises:
determining, according to the subscription message, the type of the service capacity load parameter to be counted;
counting, at every preset first time interval, the number of service resources being currently used by each virtual network function component ,VNFC, corresponding to the type; and
determining the service capacity load parameter according to the number of the service resources.

3. The method according to claim 2, wherein determining the service capacity load parameter according to the number of the service resources comprises:
in a case that there is a software license, and a software licensing capability of the license is less than an actual hardware capability, determining a ratio of the number of service resources to the software licensing capability as the service capacity load parameter; and
in a case that there is no license or the software licensing capability is greater than the actual hardware capability, determining the ratio of the number of service resources to the actual hardware capability as the service capacity load parameter.

4. The method according to claim 1, wherein reporting the service capacity load parameter to the NWDAF comprises:
reporting the service capacity load parameter to the NWDAF every second time interval, the second time interval being determined according to the subscription message.

5. The method according to claim 1, wherein reporting the service capacity load parameter to the NWDAF comprises:
in a case that there is a service capacity load parameter, reporting the service capacity load parameter to the NWDAF; and
in a case that there are a plurality of service capacity load parameters, reporting the plurality of service capacity load parameters to the NWDAF according to a preset reporting policy.

6. The method according to claim 5, wherein reporting the plurality of service capacity load parameters to the NWDAF according to the preset reporting policy comprises one of the following:
reporting the plurality of service capacity load parameters to the NWDAF;
reporting a service capacity load parameter with the highest load to the NWDAF; and
reporting a pre-designated service capacity load parameter to the NWDAF.

7. The method according to claim 1, wherein issuing, to the NWDAF, the statistical capability and the reporting capability corresponding to the service capacity load parameter comprises:
issuing the statistical capability and the reporting capability directly to the NWDAF; or
issuing the statistical capability and the reported capability to the NWDAF by means of a network exposure function ,NEF, or a network repository function ,NRF.

8. The method according to claim 1, wherein after receiving a subscription message sent by the NWDAF and used for acquiring the service capacity load parameter, the method further comprises:
receiving an unsubscription message sent by the NWDAF; and
stopping determining and reporting the service capacity load parameter according to the unsubscription message.

9. An apparatus for reporting a service capacity load parameter, comprising:
an issuing module, configured to issue, to a network data analysis function , NWDAF,, a statistical capability and a reporting capability corresponding to a service capacity load parameter;
a receiving module, configured to receive a subscription message sent by the NWDAF and used for acquiring the service capacity load parameter;
a determination module, configured to determine the service capacity load parameter according to the subscription message; and
a sending module, configured to report the service capacity load parameter to the NWDAF.

10. A computer readable storage medium, wherein the storage medium stores a computer program, and the computer program is configured to cause, when executed by a processor, the processor to perform the method as claimed in any one of claims 1 to 9.

11. An electronic device, comprising a memory and a processor, wherein the memory stores a computer program, and the processor is configured to execute the computer program to perform the method as claimed in any one of claims 1 to 9.
